# EUROPÄISCHE PATENTSCHRIFT

(11) **EP 0 848 899 B1**
(45) Veröffentlichungstag und Bekanntmachung des Hinweises auf die Patenterteilung: **04.04.2001**
(21) Anmeldenummer: 97117957.7
(22) Anmeldetag: 16.10.1997
(51) Int. Cl.: A01D 78/10

(54) **Heubearbeitungsmaschine**
Haymaking machine
Machine de fenaison

(30) Priorität: 20.12.1996 DE 29622222 U
(43) Veröffentlichungstag der Anmeldung: 24.06.1998
(73) Patentinhaber: Kverneland Gottmadingen GmbH & Co. KG, 78244 Gottmadingen (DE)
(72) Erfinder: Willburger, Richard, Dipl.-Ing., 78262 Gailingen (DE); Maier, Martin, Dipl.-Ing., 78244 Gottmadingen (DE); Gandras, Dirk, Dipl.-Ing., 78244 Gottmadingen (DE)
(74) Vertreter: Grünecker, Kinkeldey, Stockmair & Schwanhäusser Anwaltssozietät

(56) Entgegenhaltungen:
- EP-A- 0 439 067
- EP-A- 0 465 819
- EP-A- 0 607 578
- DE-C- 3 917 091
- FR-A- 2 690 604
- FR-A- 2 693 346
- NL-A- 7 102 932
- NL-A- 7 200 441

## Beschreibung

Die Erfindung betrifft eine Heubearbeitungsmaschine gemäß dem Oberbegriff des Patentanspruchs 1.

Bei einer aus FR-A-26 90 604 bekannten Heubearbeitungsmaschine besteht das Getriebegehäuse aus dem L-förmigen Antriebsteil, der das Treibritzel lagert und vom Antriebswellenstrang durchsetzt ist, und einer mit der Kreiselachse verschweißten, am Antriebsteil verschraubten Bride mit der Form eines umgekehrten Omegas. Der Antriebsteil befindet sich mit der Bride im Inneren des im Bereich des Winkelgetriebes durchgehenden Profil-Maschinenrahmens und ist mit diesem verschraubt. Das Tellerrad ist auf der Kreiselachse drehgelagert. Eine Drehverstellung der Kreiselachse ist nicht vorgesehen.

Bei einem aus FR-A-26 93 346 bekannten Kreiselheuer ist jedes Getriebegehäuse ein tragfähiger Maschinenrahmenabschnitt. Dies erfordert eine stabile Ausbildung des Getriebegehäuses und eine aufwendige Konstruktion bei der Durchführung des Antriebswellenstranges durch das Getriebegehäuse. Damit sich der Maschinenrahmen in unterschiedlichen Schräglagen bezüglich der Längsachse des Schleppers einstellen läßt, sind die Stützräder durch Verdrehen der Kreiselachsen in ihrem Laufwinkel relativ zum Maschinenrahmen verstellbar. Die Verstellung erfolgt jeweils mit einem Stellhebel oder zentral mittels gekoppelter Stellhebel. Jeder Stellhebel ist oberhalb des Getriebegehäuses mit der nach oben durchgehenden Kreiselachse verbunden.

Aus EP-A-0 439 067 ist es bekannt, den Stellhebel zum Verdrehen der Kreiselachse zwischen dem Tellerrad und der Antriebswelle durch eine Öffnung des Getriebegehäuses nach außen zu führen, wobei die Öffnung Verunreinigungen in das Winkelgetriebe eindringen läßt.

Weiterer Stand der Technik ist enthalten in DE-C-39 17 091, EP 0 465 819 A, NL 72 00 441 A und NL 71 02 932 A.

Der Erfindung liegt die Aufgabe zugrunde, eine Heubearbeitungsmaschine der eingangs genannten Art zu schaffen, die sich durch ein einfach herstellbares und universell einsetzbares sowie bequem zu montierendes Getriebekonzept auszeichnet, das eine einfache Anbringung eines Stellgliedes zum Drehverstellen der Kreiselachse ermöglicht.

Die gestellte Aufgabe wird erfindungsgemäß mit den Merkmalen des Patentanspruchs 1 gelöst.

Der Maschinenrahmen geht im Getriebebereich durch und ist stabil. Das Getriebegehäuse wird von außen her in den Maschinenrahmen eingebaut, wobei der Antriebsteil im Maschinenrahmen vom Antriebswellenstrang durchsetzt wird. Der weitere Teil des Getriebegehäuses läßt sich außerhalb des Maschinenrahmens plazieren. Das Getriebegehäuse ist einfach herzustellen und universell einsetzbar für innenliegende Kreiseleinheiten und für endseitige Kreiseleinheiten. Dies bedeutet, daß für alle Kreiseleinheiten das gleiche Getriebe verwendbar ist. Der Stellhebel läßt sich ohne Öffnungen des Getriebegehäuses und ohne die Notwendigeit, die Kreiselachse bis nach oben oder das Getriebegehäuse zu verlängern, einfach anbringen, da das Getriebegehäuse zwischen dem Außenteil und dem Maschinenrahmen den Zwischenraum für das Stellglied freihält. Obwohl das Stellglied zwischen dem Maschinenrahmen und dem Getriebegehäuse im Zwischenraum liegt, ergibt sich eine belastbare Verbindung zwischen dem Getriebegehäuse und dem Maschinenrahmen und wird das Stützrad stabil abgestützt.

Gemäß Anspruch 2 werden baulich einfach das Tellerrad und die Kreiselachse im Außenteil gelagert.

Gemäß Anspruch 3 endet die von unten kommende Kreiselachse im Zwischenraum mit einem Verstellende, an dem sich das Stellglied günstig anbringen läßt.

Gemäß Anspruch 4 hält die Deckwand des Außenteils den für den Zwischenraum notwendige Abstand zum Maschinenrahmen. Der Außenteil braucht nicht in den Maschinenrahmen einzugreifen.

Gemäß Anspruch 5 ist in der Deckwand des Außenteils eine Vertiefung eingeformt, zweckmäßig zu jeder Seite der Kreiselachse, in der sich der Stellhebel befindet. Der Außenteil kann in den Maschinenrahmen eingreifen oder zumindest bündig an diesem anstehen.

Herstellungstechnisch günstig ist die Ausführungsform gemäß Anspruch 6.

Gemäß Anspruch 7 läßt sich das Getriebegehäuse mit allen Komponenten als vorfertigbare Baueinheit ausbilden. Dies verkürzt die Endmontagezeit der Heubearbeitungsmaschine, gestattet die Funktionsprüfung des Getriebes im Vorfertigungsstadium und ist für Reparaturen und Austauscharbeiten günstig. Wird eine geschlossene Bauweise gewählt, dann ist der Getriebe-Innenbereich vor Verschmutzungen dauerhaft geschützt.

Die bauseitigen Vorbereitungen des Maschinenrahmens sind gemäß Anspruch 8 einfach. Das Getriebegehäuse läßt sich durch die Eingriffsöffnung zur Montage einführen.

Hohe Formstabilität für lange Standzeiten und eine eindeutige Bewegungsführung ergeben sich gemäß Anspruch 9. Insbesondere mit einem Vierpunkt-Kugellager wird Bauhöhe gespart, so daß sich ein sehr kompaktes Getriebegehäuse mit günstigen Hebellängen zur Kraftübertragung ergibt.

Gemäß Anspruch 10 wird eine einfache Kreiselachsausbildung erzielt. Bei der Vorfertigung des Getriebes wird der Achsstummel mit dem Stellhebel bereits integriert.

Gemäß Anspruch 11 sichern bereits die vorspringenden Befestigungselemente am Getriebegehäuse den Zwischenraum zum Unterbringen des Stellhebels.

Gemäß Anspruch 12 erfüllen die Befestigungselemente eine zusätzliche Aufgabe, da sie Grenzschwenkanschläge für den Stellhebel bilden und somit Entschwenkstellungen der Stützrädem definieren.

Die Ausführungsform gemäß Anspruch 13 ist herstellungstechnisch günstig.

Besonders zweckmäßig ist gemäß Anspruch 14 der Einsatz eines Adapterringsatzes, damit mit einem Getriebe-Grundtyp Heubearbeitungsmaschinen mit unterschiedlichen Kreiselarmkonfigurationen in den Kreiseleinheiten herstellbar bzw. umrüstbar sind.

Anhand der Zeichnung werden Ausführungsformen des Erfindungsgegenstandes erläutert. Es zeigen:
- Fig. 1: eine Hinteransicht einer Heubearbeitungsmaschine, insbesondere eines Kreiselheuers mit vier Kreiseleinheiten,
- Fig. 2: eine Draufsicht zu Fig. 1,
- Fig. 3: einen Längsschnitt durch das in Fig. 1 äußerst rechte Getriebe,
- Fig. 4: eine schematische Draufsicht zu Fig. 3,
- Fig. 5: eine Seitenansicht, in der Blickrichtung von Fig. 3, des mit seinen Komponenten vormontierbaren Getriebes, und
- Fig. 6: einen Satz von Adapterringen, von dem jeweils ein Adapterring für das in Fig. 5 gezeigte Getriebe verwendbar ist.

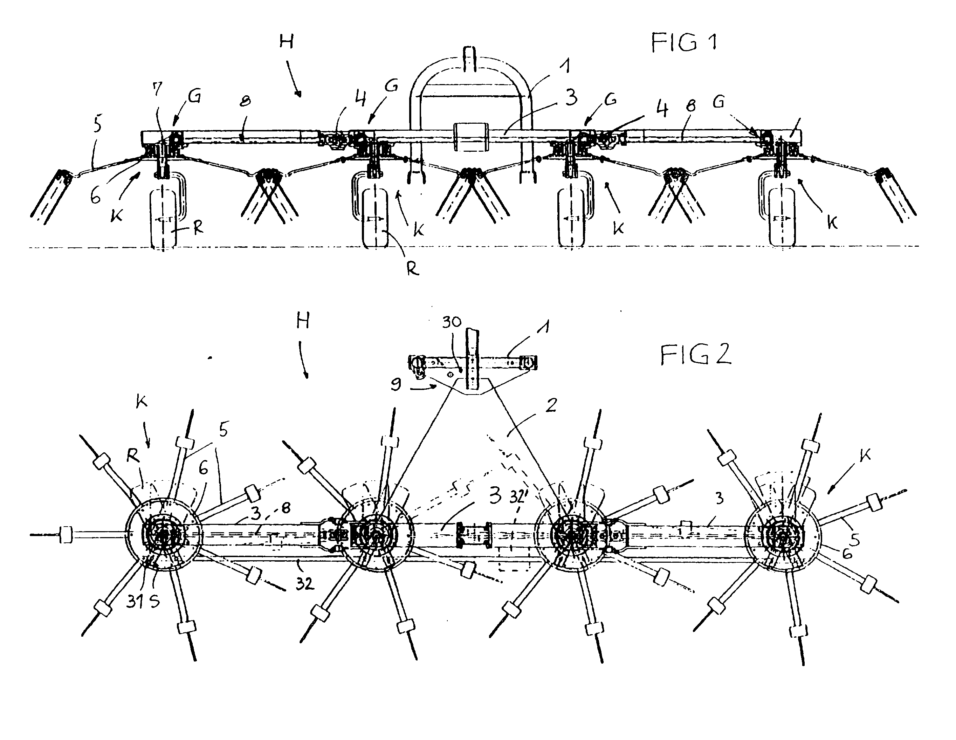

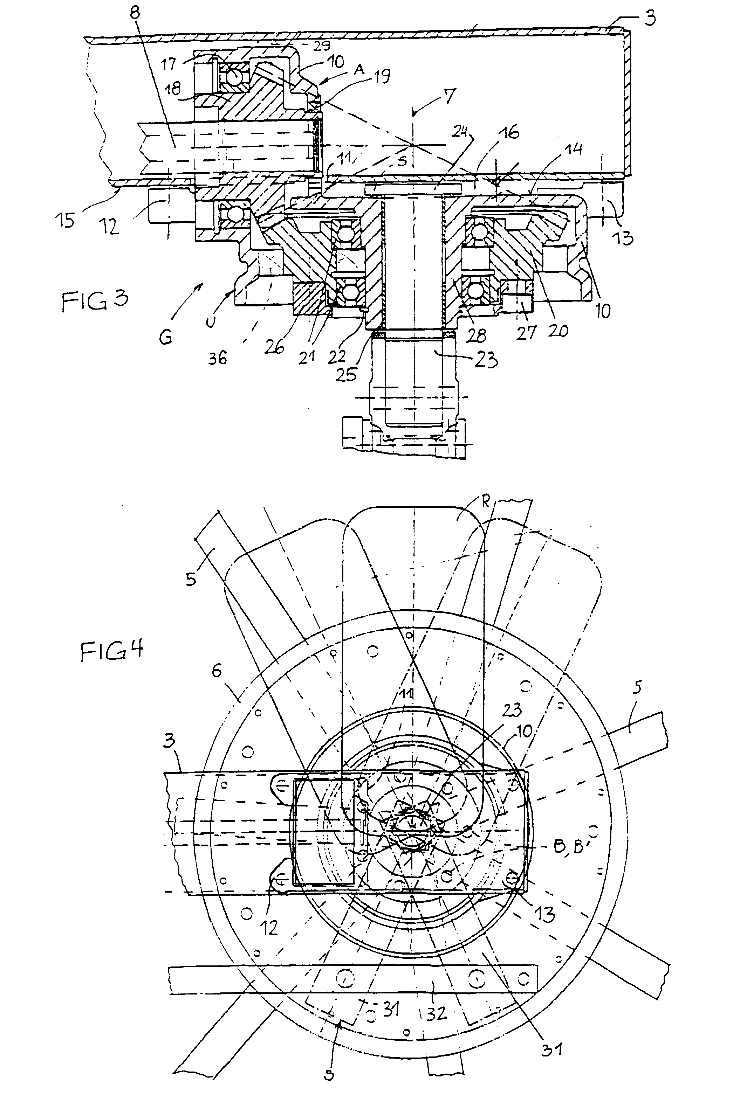

Eine Heubearbeitungsmaschine H gemäß den Fig. 1 und 2 mit mehr als zwei Kreiseleinheiten K (im vorliegenden Fall ein Kreiselheuer mit vier Kreiseleinheiten K) besitzt eine mit der Aufhängevorrichtung eines nicht gezeigten Schleppers verbindbare Tragrahmenkonstruktion 1, die über einen Verbindungsteil 2 mit einem langgestreckten Maschinenrahmen 3 verbunden ist. Zwischen dem Verbindungsteil 2 und einem Unterteil 9 der Tragrahmenkonstruktion 1 ist eine Gelenkstelle 30 vorgesehen, in der sich der Verbindungsteil 2 mit dem Maschinenrahmen 3 relativ zur Tragrahmenkonstruktion 1 (um eine im wesentlichen vertikale Gelenkachse) verstellen läßt, so daß der Maschinenrahmen entweder die in Fig. 2 erkennbare Lage in etwa senkrecht zur Fahrtrichtung des Schleppers einnimmt oder zur einen oder zur anderen Seite schräggestellt verläuft. Jede Kreiseleinheit K ist über ein Stützrad R auf dem Boden abgestützt. Das Stützrad R ist mit einer annähernd vertikalen Kreiselachse 7 verbunden, die drehverstellbar in einem Winkelgetriebe G der Kreiseleinheit K gelagert ist. Der Maschinenrahmen 3 besteht bei der gezeigten Ausführungsform aus einem starren Mittelteil, an dem mit zwei Getrieben G die beiden innenliegenden Kreiseleinheiten K angebracht sind, und aus zwei äußeren Abschnitten mit je einer endseitigen Kreiseleinheit K. Die äußeren Abschnitte sind um Gelenkstellen 4 relativ zum Mittelabschnitt auf- und abschwenkbar. Im Maschinenrahmen 3 ist ein Antriebswellenstrang 8 mit Gelenkwellenabschnitten angeordnet, der (nicht dargestellt) mit der Zapfwelle des Schleppers kuppelbar ist.

Jede Kreiseleinheit K besitzt mehrere Kreiselarme 5, die im vorliegenden Fall nicht gesteuert und in regelmäßigen Abständen um die Kreiselachsen 7 verteilt mit dem Winkelgetriebe G verbunden sind. Es sind Kreiselarmanzahlen zwischen z.B. vier und acht möglich. Die Umlaufbahnen der Kreiselarme mit endseitigen Zinken 5' überlappen einander in Querrichtung der Heubearbeitungsmaschine H. In der gezeigten Ausführungsform weist jede Kreiseleinheit K sieben Kreiselarme 5 auf. Zusätzlich ist in jeder Kreiseleinheit K ein Stützteller 6 vorgesehen, an dem die Kreiselarme 5 zusätzlich befestigt sind.

In Fig. 2 sind drei unterschiedliche Laufwinkel-Stellungen der Stützräder R angedeutet, die sich durch Drehverstellung der Kreiselachsen 7 wählen lassen. Mit jeder Kreiselachse 7 ist ein Stellglied S verbunden, z.B. ein Stellhebel 31. Die Stellhebel 31 sind über eine Koppelstange 32 zu einer gemeinsamen Bewegung gekoppelt. An der Koppelstange 32 greift eine übliche Vorrichtung 32' zum manuellen oder femgesteuerten Verstellen oder Arretieren an. Es wäre aber auch denkbar, die Stützräder R einzeln mittels des jeweiligen Stellhebels 31 zu verstellen bzw. in der jeweils gewählten Einstellage zu arretieren.

Im jeweiligen Getriebebereich ist der Maschinenrahmen 3 durchgehend und selbsttragend ausgebildet. Die Winkelgetriebe G sind vormontierbare bzw. vorfertigbare Einheiten, die an dem entsprechend vorbereiteten Maschinenrahmen 3 montiert werden. Für alle Kreiseleinheiten K kann der gleiche Getriebetyp verwendet werden.

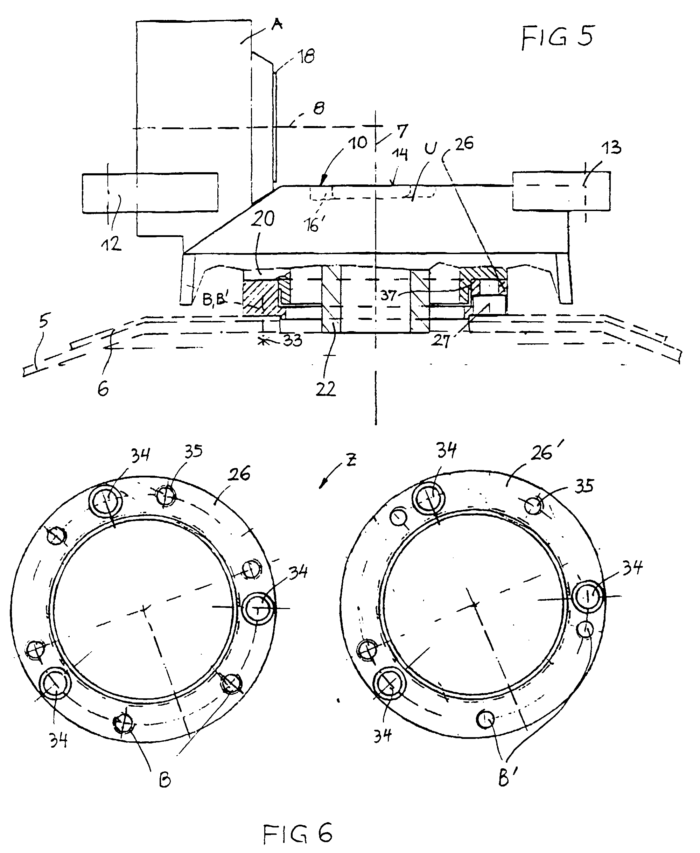

In Fig. 3 und 4 (Schnitt des in Fig. 1 und 2 äußerst rechten Winkelgetriebes G in der Ebene des Antriebswellenstranges 8 und der Kreiselachse 7) ist erkennbar, daß der Maschinenrahmen 3 ein hohles Profilrohr (Kastenbauweise) ist, innerhalb dessen sich benachbart zu einer Unterseite 15 der Antriebswellenstrang 8 erstreckt. In der Unterseite 15 ist ein Ausschnitt 11 ausgespart, durch den ein Antriebsteil A eines Getriebegehäuses 10 des Winkelgetriebes G von unten her ins Innere des Maschinenrahmens 3 derart eingreift, daß der Antriebswellenstrang 8 den Antriebsteil A durchsetzt. Das Getriebegehäuse 10 ist zweckmäßigerweise einstückig ausgebildet aus dem Antriebsteil A und einem damit verbundenen Außenteil U, so daß sich die in Fig. 5 gezeigte L-förmige Gestalt des Getriebegehäuses 10 ergibt. Am Getriebegehäuse 10 sind Befestigungsstellen 12, 13, zweckmäßigerweise einstückig, angeformt, die von außen her gegen die Unterseite 15 des Maschinenrahmens 3 gespannt werden. Zusätzlich könnten weitere, obenliegende Befestigungsstellen 29 vorgesehen werden.

Der Außenteil U des Getriebegehäuses 10 ist mit einer im wesentlichen ebenen Deckwand 14 ausgebildet, die bei am Maschinenrahmen 3 montiertem Winkelgetriebe G gegenüber der Unterseite 15 einen in der Weite, z.B. durch die Befestigungselemente 12, 13 vorbestimmten Zwischenraum 16 begrenzt, der zumindest zu einer Seite des Maschinenrahmens 3 offen ist.

Im Antriebsteil A des Getriebegehäuses 10 ist ein Treibritzel 18 in einem Wälzlager 17 drehbar gelagert, in welches der Antriebswellenstrang 8 eingreift. Das Wälzlager 17 ist zur linken Seite hin abgedeckt. Das rechtsseitige Ende des Treibritzels 18 ist durch eine Dichtung 19 abgedeckt, so daß der Antriebsteil A geschlossen ist.

Im Außenteil U ist ein Rohr 28 einstückig eingeformt, das sich von der Deckwand 14 nach unten erstreckt. Auf dem Rohr 28 ist in Lagerungen 21 ein Tellerrad 20 drehbar gelagert, das mit dem Treibritzel 18 kämmt. Die Lagerungen 21 können (wie gezeigt) zwei einreihige Kugellager sein. Es ist jedoch möglich, als Drehlagerungen 21 ein doppelreihiges Kugellager zu verwenden, oder ein sogenanntes Vierpunkt-Kugellager, das in axialer Richtung klein baut. Zwischen dem Tellerad 20 und dem Getriebegehäuse 10 kann im Außenteil U eine weitere Abdichtung 36 vorgesehen sein. Auch das untere Kugellager der Drehlagerungen 21 ist unterseitig abgedeckt (nicht dargestellt), so daß auch der Außenteil U in geschlossener Bauweise ausgeführt ist.

Im Rohr 28 ist innen mit Gleitlagerungen 25 ein Achsstummel 23 der Kreiselachse 7 drehbar und axial unverschieblich festgelegt, der über nicht dargestellte Einrichtungen mit dem Stützrad R verbunden ist. Am oben liegenden, durch die Oberseite 14 ragenden Ende des Achsstummels 23 ist ein Stellende 24 vorgesehen, mit dem das Stellglied S, d.h. der Stellhebel 31, verbunden ist, der somit im Zwischenraum 16 liegt und nach außen ragt, um entweder manuell oder mittels der Koppelstange 32 in Fig. 2 die jeweilige Position des Stützrades einzustellen.

Die Kreiselarme 5 sind entweder direkt an der Unterseite des Tellerrades 20 festgelegt, oder - wie gezeigt - unter Zwischenschaltung eines Adapterringes 26, der mit Halteschrauben 27 an der Unterseite des Tellerrades 20 befestigt ist. Das Tellerrad 20 ist über seine Drehlagerungen 21 an einer Sicherung 22 nach unten abgestützt.

In der zugehörigen Draufsicht von Fig. 4 (teilweise als Durchsicht) sind drei unterschiedliche Stellungen des Stützrades R angedeutet, die sich durch Betätigen des Stellglieds S bzw. des Stellhebels 31 mittels der Koppelstange 32 ein- und feststellen lassen. Die Aufnahmebohrungen für die nicht gezeigten Halteschrauben, die in die Befestigungselemente 12, 13 eingebracht werden, sind um die Aussparung 11 an der Unterseite des Maschinenrahmens 3 gruppiert. Die Befestigungselemente 12, 13 liegen innerhalb des Umrisses des Maschinenrahmens 3. Der Außenteil U steht mit dem Getriebegehäuse 10 unterhalb des Maschinenrahmens 3 vor. Mit B, B' sind Befestigungsstellen-Bohrungsbilder der Adapterringe 26, 26' angedeutet. Im gezeigten Fall sind für die sieben Kreiselarme 5 sieben gleichmäßig verteilte Gewindebohrungen 35 im Adapterring 26 vorgesehen. Wird die Kreiseleinheit mit beispielsweise fünf Kreiselarmen ausgestattet, dann wird ein Adpaterring 26' mit einem anderen Bohrungsbild B' mit nur fünf Gewindebohrungen 35 am Tellerrad 20 angebracht.

Das Winkelgetriebe G wird mit seinen Komponenten (Treibritzel 18, Tellerad 20, Drehlagerungen 21, 17, den jeweiligen Abdichtungen, dem Achsstummel 23, und gegebenenfalls dem Stützrad R) vormontiert bzw. vorgefertigt und als vorgefertigte Einheit in den Maschinenrahmen 3 eingesetzt. Es können sogar die Kreiselarme 5 nach Auswahl des jeweils passenden Adapterrings 26, 26' angebaut sein.

Gemäß den Fig. 5 und 6 werden die Kreiselarme 5 am Adapterring 26 mit schematisch angedeuteten Befestigungsschrauben 33 festgelegt, wobei der zur Kreiselarm-Anzahl passende Adapterring 26 aus einem Satz Z von Adapterringen 26, 26' ausgewählt wird, der das gerade passende Bohrungsbild B, B' besitzt. Der Adapterring 26 wird in einem vorgeformten Sitz 37 des Tellerrades 20 mittels der Halteschrauben 27 festgelegt. Dann wird der Stützteller 6 aufgesetzt und werden die Kreiselarme 5 von unten mittels der Befestigungsschrauben 33 festgelegt.

In Fig. 5 ist gestrichelt angedeutet, daß sich der Zwischenraum 16' für den Stellhebel 31 alternativ mittels wenigstens einer Vertiefung in der Deckwand 14 des Außenteils U bilden läßt. Die Vertiefung könnte sektorförmig und an beiden, diametral gegenüberliegenden Seiten der Buchse 22 geformt sein, um unabhängig von der Einbaulage des Getriebegehäuses den Stellhebel 31 an der jeweils gewünschten Seite des Maschinenrahmens 3 herausführen zu können. Die Befestigungsstellen 12, 13 in Fig. 5 könnten dabei gegenüber den gezeigten Lagen nach unten versetzt werden, um auch den Außenteil U in den Maschinenrahmen 3 eingreifen oder daran anliegen zu lassen.

In jedem Adapterring 26, 26' (die Anzahl der Adapterringe des Satzes kann natürlich mehr als zwei betragen, abhängig von der Kreiselarm-Anzahl der zu bauenden Kreiseleinheiten) sind Bohrungen 34 für die Halteschrauben 27 mit dem gleichen Bohrungsbild angeordnet, im vorliegenden Fall mit einer Teilung von z.B. 110°, 110° und 140°. In jedem Adapterring 26, 26' ist das Befestigungsstellen-Bohrungsbild B, B' unterschiedlich. Die Gewindebohrungen 35 für die Befestigungsschrauben 33 sind mit der jeweiligen Anzahl und Teilung der Kreiselarme 5 vorgesehen, und zwar bei der gezeigten Ausführungsform auf dem gleichen Teilkreisdurchmesser wie die Bohrungen 34. Es wäre denkbar, für die Bohrungsbilder unterschiedliche Teilkreisdurchmesser zu wählen. Ein Adapterring (nicht gezeigt) mit acht Gewindebohrungen 35 für acht Kreiselarme 5 läßt sich natürlich auch zur Anbringung von nur vier Kreiselarmen benutzen. Das Bohrungsbild der Bohrungen 34 ist zweckmäßigerweise derart gewählt, daß es die Unterbringung der Gewindebohrungen 35 für die unterschiedlichen Kreiselarm-Anzahlen problemlos ermöglicht und bei allen Adapterringen des Satzes Z gleich ist, so daß ein- und dasselbe Tellerrad 20 die wahlweise Anbringung jedes Adapterringes 26, 26' des Satzes Z ermöglicht. Die Adapterringe lassen auch ein nachträgliches Umrüsten der Kreiseleinheiten zu. Jeder Adapterring kann aus einfachem, kostengünstigem und einfach zu bearbeitendem Material und nicht notwendigerweise aus dem hochwertigen Material des Tellerrades 20 bestehen.

## Patentansprüche

1. Heubearbeitungsmaschine (H), insbesondere Kreiselheuer, mit mindestens zwei Kreiseleinheiten (K) an einem einen Antriebswellenstrang (8) enthaltenden Maschinenrahmen (3), wobei jede Kreiseleinheit (K) ein ein Winkelgetriebe (G) mit einem Treibritzel (18) und einem Tellerrad (20) enthaltendes Getriebegehäuse (10) aufweist und mittels eines Stützrades (R) auf dem Boden abstützbar ist, das an einer annähernd vertikalen, im Getriebegehäuse (10) vorgesehenen Kreiselachse (7) angeordnet ist, und wobei ein das Treibritzel (18) lagernder Antriebsteil (A) des Getriebegehäuses (10) innen im Maschinenrahmen (3) angeordnet und vom Antriebswellenstrang durchsetzt ist, **dadurch gekennzeichnet**, daß das Getriebegehäuse (10) aus dem Antriebsteil (A) und einem damit verbundenen, außerhalb des Maschinenrahmens (3) liegenden Außenteil (U) besteht, und daß zwischen dem Maschinenrahmen (3) und dem Außenteil (U) ein Zwischenraum (16, 16') vorgesehen ist, in dem ein zur Drehverstellung der Kreiselachse (7) mit der Kreiselachse (7) verbundenes Stellglied (S, 31) von außerhalb des Getriebegehäuses (10) und des Maschinenrahmens (3) zugänglich angeomdet ist.

2. Heubearbeitungsmaschine nach Anspruch 1, **dadurch gekennzeichnet**, daß das Tellerrad (20) und die Kreiselachse (7) im Außenteil (U) drehgelagert sind.

3. Heubearbeitungsmaschine nach Anspruch 1, **dadurch gekennzeichnet**, daß im Zwischenraum (16, 16') ein Verstellende (24) der Kreiselachse (7) vorgesehen und mit dem Stellglied (S, 31) verbunden ist.

4. Heubearbeitungsmaschine nach Anspruch 1, **dadurch gekennzeichnet**, daß der Zwischenraum (16, 16') durch die Deckwand (14) des Außenteils (U) und die Unterseite des Maschinenrahmens (3) begrenzt und zumindest zu einer Seite des Maschinenrahmens (3) offen ist.

5. Heubeabeitungsmaschine nach Anspruch 1, **dadurch gekennzeichnet**, daß der Zwischenraum (16') zwischen der Unterseite des Maschinenrahmens (3) und einer von außen bis zur Kreiselachse (7) führenden Vertiefung in der Deckwand (14) des, gegebenenfalls von außen in den Maschinenrahmen (3) eingreifenden, Außenteils (U) vorgesehen ist.

6. Heubearbeitungsmaschine nach Anspruch 1, **dadurch gekennzeichnet**, daß das Getriebegehäuse (10) aus dem Antriebs- und Außenteilen (A, U) und mit angeformten Befestigungselementen (12, 13) einstückig ausgebildet ist.

7. Heubearbeitungsmaschine nach wenigstens einem der Ansprüche 1 bis 6, **dadurch gekennzeichnet**, daß das Getriebegehäuse (10) mit dem Treibritzel (18), dem Tellerrad (20) und deren Lagerungen (17, 21) sowie mit der drehverstellbar eingesetzten Kreiselachse (7) eine, vorzugsweise offen oder geschlossen, vorfertigbare Baueinheit ist.

8. Heubearbeitungsmaschine nach wenigstens einem der Ansprüche 1 bis 7, **dadurch gekennzeichnet**, daß der Maschinenrahmen (3) in seiner Unterseite (15) eine Eingriffsöffnung (11) zumindest für den Antriebsteil (A) und um die Eingriffsöffnung (11) gruppierte Befestigungsöffnungen aufweist.

9. Heubearbeitungsmaschine nach wenigstens einem der vorhergehenden Ansprüche, **dadurch gekennzeichnet**, daß das Getriebegehäuse (10) in der Deckwand (14) des Außenteils (U) eine mit deren Deckwand (14) verbundene, integrierte Buchse (22) aufweist, auf der das Tellerrad (20), vorzugsweise mittels zweier einreihiger Kugellager (21) oder eines doppelreihigen Kugellagers oder eines Vier-Punkt-Kugellagers gelagert ist, und in der die Kreiselachse (7), vorzugsweise mittels einer Gleitlagerung (25), gelagert sind.

10. Heubearbeitungsmaschine nach einem der Ansprüche 1 bis 9, **dadurch gekennzeichnet**, daß die Kreiselachse (7) einen unterseitig die Buchse (22) überragenden Achsstummel (23) aufweist, dessen oberes Verstellende (24) im Zwischenraum (16, 16') mit einem sich in etwa parallel zur Unterseite (15) des Maschinenrahmens (3) erstreckenden und über den Umriß des Maschinenrahmens (3) nach außen stehenden, das Stellglied (S) bildenden Stellhebel (31) verbunden ist.

11. Heubearbeitungsmaschine nach wenigstens einem der vorhergehenden Ansprüche, **dadurch gekennzeichnet**, daß die Befestigungselemente (12, 13) am Getriebegehäuse (10) über die Außenteil-Deckwand (14) vorspringen und derart an die Unterseite (15) des Maschinenrahmens (3) ansetzbar sind, daß der Zwischenraum (16) an den Längskanten des Maschinenrahmens (3) wenigstens einen offenen Durchgang für den Stellhebel (31) begrenzt.

12. Heubearbeitungsmaschine nach wenigstens einem der vorhergehenden Ansprüche, **dadurch gekennzeichnet**, daß die Befestigungselemente (12, 13) am Getriebegehäuse (10) Schwenkanschläge für den Stellhebel (31) bilden.

13. Heubearbeitungsmaschine nach wenigstens einem der vorhergehenden Ansprüche, **dadurch gekennzeichnet**, daß das Getriebegehäuse (10) ein Metallguß- oder Druckgußteil mit ein Seitenansicht L-förmigeer Gestalt ist.

14. Heubearbeitungsmaschine nach wenigstens einem der vorhergehenden Ansprüche, **dadurch gekennzeichnet**, daß an Befestigungsbohrungen aufweisenden Tellerrad (20) ein Adapterring (26) oder (26') eines aus mehreren unterschiedlichen Adapterringen (26, 26') bestehenden Adapterring-Satzes (Z) austauschbar befestigt ist, und daß in dem Adapterring-Satz (Z) jeder Adapterring (26) oder (26') ein zu den Befestigungsbohrungen des Tellerrads passendes gemeinsames Lochbild und ein zur jeweiligen Kreiselarmkonfiguration der angebauten Kreiseleinheit (K) passendes individuelles Lochbild (B, B') zum Festlegen der Kreiselarme (5) aufweist.

## Claims

1. Haymaking machine (H), more especially a rotary-type haymaker, having at least two rotary units (K) on a machine frame (3) including a line of drive shafts (8), each rotary unit (K) having a gear housing (10), which includes a mitre gear (G) with a driving pinion (18) and an axle-drive bevel wheel (20), and being supportable on the ground by means of a supporting wheel (R), which is disposed on an approximately vertical rotary axle (7) provided in the gear housing (10), and a driving member (A) of the gear housing (10) being disposed internally in the machine frame (3) and being traversed by the line of drive shafts, said driving member carrying the driving pinion (18), characterised in that the gear housing (10) comprises the driving member (A) and an external portion (U), which is connected to said driving member and lies externally of the machine frame (3), and in that an intermediate space (16, 16') is provided between the machine frame (3) and the external portion (U), a control member (S, 31) being disposed in said intermediate space so as to be accessible from outside of the gear housing (10) and the machine frame (3), and said control member being connected to the rotary axle (7) for the rotatable adjustment of the rotary axle (7).

2. Haymaking machine according to claim 1, characterised in that the axle-drive bevel wheel (20) and the rotary axle (7) are rotatably mounted in the external portion (U).

3. Haymaking machine according to claim 1, characterised in that an adjustable end (24) of the rotary axle (7) is provided in the intermediate space (16, 16') and is connected to the control member (S, 31).

4. Haymaking machine according to claim 1, characterised in that the intermediate space (16, 16') is defined by the upper wall (14) of the external portion (U) and the underside of the machine frame (3) and is open at least towards one side of the machine frame (3).

5. Haymaking machine according to claim 1, characterised in that the intermediate space (16') is provided between the underside of the machine frame (3) and an indentation, which extends from externally as far as the rotary axle (7), in the upper wall (14) of the external portion (U), which possibly engages in the machine frame (3) from externally.

6. Haymaking machine according to claim 1, characterised in that the gear housing (10) is formed in one piece from the driving member (A) and external portion (U) and with mounting means (12, 13) moulded thereon.

7. Haymaking machine according to at least one of claims 1 to 6, characterised in that the gear housing (10), with the driving pinion (18), the axle-drive bevel wheel (20) and their bearing surfaces (17, 21) as well as with the rotary axle (7), which is inserted in a rotatably adjustable manner, is a pre-fabricatable structural unit, preferably in an open or closed form.

8. Haymaking machine according to at least one of claims 1 to 7, characterised in that the machine frame (3) has, in its underside (15), one engagement opening (11) at least for the driving member (A), and mounting apertures which are grouped around the engagement opening (11).

9. Haymaking machine according to at least one of the preceding claims, characterised in that the gear housing (10) has, in the upper wall (14) of the external portion (U), an integrated bush (22), which is connected to the upper wall (14) thereof, and on which bush is mounted the axle-drive bevel wheel (20), preferably by means of a single row of two ball bearings (21) or by means of a double row of one ball bearing or by means of a four-point ball bearing, and the rotary axle (7) is mounted in said bush, preferably by means of a slidable bearing surface (25).

10. Haymaking machine according to one of claims 1 to 9, characterised in that the rotary axle (7) has an axle portion (23), which protrudes beyond the bush (22) at the lower end, and the upper adjustable end (24) of which axle portion in the intermediate space (16, 16') is connected to a control lever (31), which forms the control member (S), said lever extending substantially parallel to the underside (15) of the machine frame (3) and protruding outwardly beyond the outline of the machine frame (3).

11. Haymaking machine according to at least one of the preceding claims, characterised in that the mounting means (12, 13) on the gear housing (10) protrude beyond the upper wall (14) of the external portion and are attachable to the underside (15) of the machine frame (3) in such a manner that the intermediate space (16) at the longitudinal edges of the machine frame (3) defines at least one open passageway for the control lever (31).

12. Haymaking machine according to at least one of the preceding claims, characterised in that the mounting means (12, 13) on the gear housing (10) form pivotal stop members for the control lever (31).

13. Haymaking machine according to at least one of the preceding claims, characterised in that the gear housing (10) is a metal casting or die casting with an L-shaped configuration when viewed from the side.

14. Haymaking machine according to at least one of the preceding claims, characterised in that an adapter ring (26) or (26') of a set of adapter rings (Z), which comprises a plurality of different adapter rings (26, 26'), is interchangeably mounted on axle-drive bevel wheel (20), which includes mounting bores, and in that each adapter ring (26) or (26') in the set of adapter rings (Z) has a common pattern of perforations, which matches the mounting bores of the axle-drive bevel wheel, and an individual pattern of perforations (B, B'), which matches the respective rotary arm configuration of the attached rotary unit (K), to secure the rotary arms (5).

## Revendications

1. Machine de fenaison (H), notamment machine de fenaison rotative, avec au moins deux unités de rotation (K) à un châssis de machine (3) contenant une ligne d'arbres d'entraînement (8), où chaque unité gyroscopique (K) présente un carter des engrenages (10) comportant un engrenage angulaire (G) avec un pignon menant (18) et une couronne de différentiel (20) et peut s'appuyer au moyen d'une roue de support (R) sur le sol, qui est disposée à un axe de rotation (7) approximativement vertical, prévu dans le carter des engrenages (10) et où une partie d'entraînement (A) du carter des engrenages (10), logeant le pignon menant (18), est disposé à l'intérieur dans le châssis de machine (3) et est traversée par la ligne d'arbres d'entraînement, caractérisée en ce que le carter des engrenages (10) est constitué de la partie d'entraînement (A) et d'une partie extérieure (U) reliée à celle-ci, située à l'extérieur du châssis de machine (3), et en ce qu'il est prévu entre le châssis de machine (3) et la partie extérieure (U) un espace intermédiaire (16, 16') dans lequel est disposé un organe de positionnement (S, 31) relié, en vue de l'ajustement tournant de l'axe de rotation (7), à l'axe de rotation (7), d'une manière accessible de l'extérieur du carter des engrenages (10) et du châssis de machine (3).

2. Machine de fenaison selon la revendication 1, caractérisée en ce que la couronne de différentiel (20) et l'axe de rotation (7) sont logés d'une manière tournante dans la partie extérieure (U).

3. Machine de fenaison selon la revendication 1, caractérisée en ce qu'il est prévu dans l'espace intermédiaire (16, 16') une extrémité d'ajustement (24) de l'axe gyroscopique (7) et est reliée à l'organe de positionnement (S, 31).

4. Machine de fenaison selon la revendication 1, caractérisée en ce que l'espace intermédiaire (16, 16') est délimité par la paroi de recouvrement (14) de la partie extérieure (U) et le côté inférieur du châssis de machine (3) et est ouvert vers au moins un côté du châssis de machine (3).

5. Machine de fenaison selon la revendication 1, caractérisée en ce que l'espace intermédiaire (16') entre le côté inférieur du châssis de machine (3) et un creux dans la paroi de recouvrement (14) menant de l'extérieur jusqu'à l'axe de rotation (7) est prévu dans la paroi de recouvrement (14) de la partie extérieure (U) s'engageant le cas échéant de l'extérieur dans le châssis de machine (3).

6. Machine de fenaison selon la revendication 1, caractérisée en ce que le carter des engrenages (10) est réalisé en une pièce à partir des parties d'entraînement et extérieur (A, U) et avec des éléments de fixation rapportés par formage (12, 13).

7. Machine de fenaison selon au moins l'une des revendications 1 à 6, caractérisée en ce que le carter des engrenages (10), avec le pignon menant (18), la couronne de différentiel (20) et les logements (17, 21) de ceux-ci et avec l'axe de rotation (7) mis en place d'une manière ajustable par rotation, constitue une unité de construction de préférence ouverte ou fermée, pouvant être préfabriquée.

8. Machine de fenaison selon au moins l'une des revendications 1 à 7, caractérisée en ce que le châssis de machine (3) présente dans son côté inférieur (15) une ouverture d'engagement (11) au moins pour la partie d'entraînement (A) et des ouvertures de fixation groupées autour de l'ouverture d'engagement (11).

9. Machine de fenaison selon au moins l'une des revendications précédentes, caractérisée en ce que le carter des engrenages (10) présente dans la paroi de recouvrement (14) de la partie extérieure (U) une douille intégrée (22) reliée à la paroi de recouvrement (14) de celle-ci sur laquelle est logée la couronne de différentiel (20), de préférence au moyen de deux roulements à billes (21) à une rangée ou d'un roulement à billes à rangée double ou d'un roulement à billes sur quatre points et dans lequel est logé l'axe de rotation (7), de préférence au moyen d'un palier à glissement (25).

10. Machine de fenaison selon l'une des revendications 1 à 9, caractérisée en ce que l'axe de rotation (7) présente un bout d'axe (23) dépassant la douille (22) au côté inférieur dont l'extrémité d'ajustement supérieure (24) est reliée dans l'espace intermédiaire (16, 16') à un levier de positionnement (31) s'étendant à peu près parallèlement au côté inférieur (15) du châssis de machine (3) et faisant saillie sur le contour du châssis de machine (3) vers l'extérieur, formant l'organe de positionnement (S).

11. Machine de fenaison selon au moins l'une des revendications précédentes, caractérisée en ce que les éléments de fixation (12, 13) font saillie au carter des engrenages (10) sur la paroi de recouvrement (14) de la partie extérieure et peuvent être appliqués au côté inférieur (15) du châssis de machine (3) de façon que l'espace intermédiaire (16), aux arêtes longitudinaux du châssis de machine (3), délimite au moins un passage ouvert pour le levier de positionnement (31).

12. Machine de fenaison selon au moins l'une des revendications précédentes, caractérisée en ce que les éléments de fixation (12, 13) forment au carter des engrenages (10) des butées de pivotement pour le levier de positionnement (31).

13. Machine de fenaison selon l'une des revendications précédentes, caractérisée en ce que le carter des engrenages (10) est une pièce coulée en métal ou coulée sous pression d'une configuration en forme de L en une vue de côté.

14. Machine de fenaison selon au moins l'une des revendications précédentes, caractérisée en ce qu'il est fixé d'une manière échangeable à la couronne de différentiel (20) présentant les perçages de fixation une bague d'adaptation (26) ou (26') d'un jeu de bagues d'adaptation (Z) constitué de plusieurs bagues d'adaptation différentes (26, 26') et en ce que, dans le jeu de bagues d'adaptateur (Z), chaque bague d'adaptateur (26) ou (26') présente un schéma de trous commun, adapté aux perçages de fixation de la couronne de différentiel, et un schéma de trous individuel (B, B') adapté à la configuration respective des bras gyroscopiques de l'unité de rotation (K) montée, pour la fixation des bras gyroscopiques (5).
